(19) Europäisches Patentamt

European Patent Office

Office européen des brevets

(11) **EP 0 711 227 B1**

## (12) EUROPÄISCHE PATENTSCHRIFT

(45) Veröffentlichungstag und Bekanntmachung des Hinweises auf die Patenterteilung:
**23.12.1998 Patentblatt 1998/52**

(21) Anmeldenummer: **94921603.0**

(22) Anmeldetag: **18.07.1994**

(51) Int. Cl.⁶: $B60C\ 3/04$, $B60C\ 15/06$

(86) Internationale Anmeldenummer:
**PCT/DE94/00880**

(87) Internationale Veröffentlichungsnummer:
**WO 95/03945 (09.02.1995 Gazette 1995/07)**

(54) **FAHRZEUGLUFTREIFEN**

VEHICLE TYRE

PNEU POUR VEHICULES

(84) Benannte Vertragsstaaten:
**DE FR GB IT**

(30) Priorität: **30.07.1993 DE 4326081**

(43) Veröffentlichungstag der Anmeldung:
**15.05.1996 Patentblatt 1996/20**

(73) Patentinhaber:
**Continental Aktiengesellschaft
30165 Hannover (DE)**

(72) Erfinder:
• **ROGGISCH, Peter
D-15517 Fürstenwalde (DE)**

• **GALKE-ROGGISCH, Kristina
D-15517 Fürstenwalde (DE)**

(56) Entgegenhaltungen:
| | |
|---|---|
| **EP-A- 0 119 152** | **EP-A- 0 128 852** |
| **EP-A- 0 273 558** | **EP-A- 0 359 734** |
| **EP-A- 0 371 755** | **EP-A- 0 409 518** |
| **FR-A- 2 554 059** | |

• **PATENT ABSTRACTS OF JAPAN vol. 15, no. 443 (M-1178) 12. November 1991 & JP,A,03 189 214 (TOYO TIRE&RUBBER CO. LTD.) 19. August 1991**

## Beschreibung

Die Erfindung betrifft Pkw-Reifen, Transportreifen, EM-Reifen, Reifen für die Landwirtschaft in Radialausführung, insbesondere jedoch betrifft sie Fahrzeugluftreifen mit einem Standardaußendurchmesser (DA) größer als 850mm und einer zulässigen Standardbelastung von größer als 2500kg gemäß der zugeordneten Referenzgeschwindigkeit mit einer Radialkarkasse und einem zugfesten Gürtel, NKW-Reifen sowie Reifen für Anhänger und Aufliegerfahrzeuge vorzugsweise jedoch Reifen dieser Gruppen, die mit hohen Geschwindigkeiten fahren und hohe Lasten transportieren auf befestigten und teilweise auch unbefestigten Fahrbahnen fahren mit einem H/B-Verhältnis von 0,5 bis 1, die auf Flachbett-, Schrägschulter- und Steilschulterfelgen mit Wulstsitzneigungen von 0 Grad, 5 Grad und 15 Grad eingesetzt werden. Die Erfindung betrifft weiterhin die Herstellung der o.g. Reifen, insbesondere, die durch die Reduzierung von Schulterdicke (DS) und Wulstdicke (DW) ermöglichte materialschonende Vulkanisation und die daraus resultierenden qualitätsverbessernden Reifen.

Charakteristik der bekannten technischen Lösungen

Hinsichtlich der Breite des Gürtels/der Lauffläche des Reifens existieren drei Gürtelkonzepte.

Beim ersten Konzept ist die Lauffläche (BL) größer als die Gürtelbreite (BG). Die hieraus resultierenden Nachteile ergeben sich vorallem durch die starke Materialkonzentration im Bereich der Reifenschulter (DS). Die starke Wärmeentwicklung im Bereich der Schulter ist der Grund für eine ungenügende Hochgeschwindigkeitstauglichkeit dieses Reifenkonzepts. Da ausschließlich Stahlkord als Armierungsmaterial für den Gürtel eingesetzt wird, ist der Übergang von der Gürtelkante zum Gummi durch einen hohen Modulsprung gekennzeichnet.

Dieser Steifigkeitssprung führt zu einer unterschiedlichen Beweglichkeit des Außenstollens der Lauffläche. Der außerhalb des Gürtels liegende Teil hat höhere Beweglichkeit und führt zu verstärktem Kantenverschleiß.Die Abrieblaufstrecke wird hierdurch vorallem bei Frontachsreifen stark herabgesetzt.

Beim zweiten Konzept (Patentschrift DD 238 360 A5) ist die Laufflächenbreite schmaler als die Gürtelkante. Die oben beschriebenen Nachteile sind damit beseitigt. Nachteilig wirkt sich hier aus, daß der über die Lauffläche ragende Teil des Gürtels nicht zur Versteifung der Lauffläche genutzt werden kann. Durch die relativ schmale Lauffläche entsteht ein höherer spezifischer Bodendruck.

Als nachteilig wirken sich auch die senkrechten Stufenflächen des Außenstollens aus. Beim Angreifen hoher Quer- oder Seitenkräfte ist infolge des reduzierten Widerstandsmomentes eine höhere Beweglichkeit gegeben.

Zwischen den Gürtellagen wird eine bis zu 5mm starke Gummiplatte angeordnet, die die Materialdicke im Laufflächenbereich dadurch wieder erhöht.Die Laufflächenbreite wird durch eine etwa senkrechte Stufe bestimmt. Die außerhalb der Laufflächenbreite liegenden Gürtelenden werden durch etwa parallel zur Lauffläche verlaufende Grundflächen begrenzt. Der kritische Bereich der Gürtelkante erhält damit im Verhältnis zur Lauffläche nur eine etwa 60%ige Dicke und ist daher einer Übervulkanisation und damit Materialschädigungen preisgegeben.

Beim dritten Konzept(Patentschriften JP 3-295703 und JP 4-5109) stimmen Gürtelbreite und Laufflächenbreite überein. Bei diesem Konzept liegen somit gute Bedingungen hinsichtlich der gleichmäßigen Versteifung der Lauffläche durch den Gürtel vor.Im Bereich der Karkasse ist zwar die Theorie der Gleichgewichtskontur bekannt, wird aber in der Praxis nicht konsequent angewendet (EP 0273558 B1), so daß besonders für den Wulstbereich ungünstige Verhältnisse vorliegen. Die Kontur der Karkaßlinie ist gekennzeichnet durch einen Wendepunkt im Wulst/unteren Seitenwandbereich.

Die theoretische und praktische Kontur unterscheiden sich (DE 37 05 534 A1, DE 34 11 909 C2). Eine von der natürlichen Gleichgewichtskontur abweichend festgelegte Karkaßkontur muß zwangsläufig schon bei Luftdruckbeaufschlagung des Reifens zu Materialverschiebungen und damit zu Schubbeanspruchungen zwischen den Aufbauteilen führen. Diese Schub-und Scherbeanspruchungen werden dann durch die Belastung und die daraus resultierende Einfederung des Reifens nochmals verstärkt.

In der Patentschrift DE 3439308 C wird für den Kerngummi eine Härte von 45-65 Shore vorgesehen. Geschützt wird die Verbindung von Kerngummihärte, Hartgummistreifen und Kordabdeckstreifen aus einem organischen Material. Die Einzelposition Kerngummihärte dagegen ist nicht geschützt.

Ziel ist es, durch diese Verstärkungseinlagen von relativ großer Höhe (z.B. 12 R22.5 = 80mm) die Verformung zu reduzieren, um eine größere Wulstdauerhaltbarkeit zu erhalten. Insgesamt wird ein komplizierter und teurer Wulstaufbau geschützt.Die käuflichen Reifen weisen Kerngummihärten zwischen 60 und 80 Shore A auf.

Ziel der Erfindung

Das Ziel der Erfindung besteht in einer Verbesserung der Qualität der Reifen, insbesondere in der Erhöhung der Lebensdauer, der Hochgeschwindigkeitstauglichkeit, der Übertragung höherer Reifenseitenkräfte, der Senkung des Rollwiderstandes bei gleichzeitiger Senkung des Materialeinsatzes, des Arbeitsaufwandes und des Energieeinsatzes bei der Herstellung der Reifen.

## Darlegung des Wesens der Erfindung

Das Wesen der Erfindung besteht darin, Fahrzeugluftreifen mit höheren Seitenkräften und Abrieblaufstrecken, geringerem Rollwiderstand und besserer Runderneuerungsfähigkeit zu schaffen. Diese Aufgabe wird durch die im Patentanspruch 1 gegebene Lehre gelöst.

Die ungefähre Übereinstimmung von Gürtelbreite und Laufflächenbreite in Verbindung mit der Festlegung der Neutralenkontur der Karkasse, reduziert die Schulterdicken (DS) der Reifen. Da bei Frontachsreifen im allgemeinen die Reifenschulter durch einen Radius abgerundet wird, gilt für die Laufflächenbreite (BL) der theoretische Schnittpunkt als vorteilhaft, der sich aus dem Laufflächenradius und dem Konturzug der oberen Seitenwand ergibt.

Als Schulterdicke (DS) gilt dabei die größte Dicke im Bereich der Schulter. Der Radius an der Laufflächenkante darf die Schulterdicke nur unwesentlich reduzieren (max. 2mm). Die Schulterdicke ist dabei etwa gleich der Dicke des Reifens im Zenit der Lauffläche und maximal um bis zu 10% dicker. Es ist jedoch keine zwingende Bedingung gegeben, daß die Laufflächenbreite gleich der Gürtelbreite ist. Geringere Schulterdicken garantieren einerseits geringere Materialerwärmung beim Lauf des Reifens unter Last und andererseits senken sie bei hohen Geschwindigkeiten, die in diesem Bereich angreifenden Fliehkräfte.

Die Lauffläche wird durch den zug-und biegesteifen Gürtel vollständig unterstützt und im gesamten Laufflächenbereich gleichmäßig versteift. Es erfolgt eine Ruhigstellung der Laufflächenkante. Die Bewegungen und damit die Reibarbeit an der Laufflächenkante des Außenstollens weiden herabgesetzt. Das bei Einfederung des Reifens auf die Laufflächenkante wirkende Schultermoment wirkt nicht mehr so stark. Die Entkopplung zwischen Seitenwand und Laufflächenkante kann somit verbessert werden.

In Heft 4/1986 der Zeitschrift Tire Science & Technology. wird ab Seite 264 ff über ein Reifenmodell, bestehend aus den zwei Federkomponenten eines Reifens -Gürtelsteife (EJ) und Karkassensteife (K-Wert) - berichtet.

Die Wirkungen dieser Federn beim Angriff von Seitenkräften werden dargestellt. Danach ist es vorteilhaft, wenn eine hohe Gürtelsteife mit einem niedrigen K-Wert der Karkasse kombiniert wird. Da die Seitenkraft über den Laufflächengummi reibend auf die Fahrbahnoberfläche übertragen wird, kann damit der Laufflächenabrieb beeinflußt werden. Dadurch, daß der Kerngummi der Karkasse aus einem Vulkanisat mit einer Härte von < 58 Shore A nach DIN besteht und die Materialdicken des Reifenquerschnitts reduziert werden, wird die angestrebte hohe Karkassennachgiebigkeit erzielt.

Eine hohe Karkassennachgiebigkeit (niedriger K-Wert) ermöglicht, den größten Teil der Deformationen der Federn abzufangen. Es wird ein minimaler Laufflächengummiabrieb infolge des verhältnismäßig höheren EJ des Gürtels sichtbar. Es ist besonders für NKW-Reifen erforderlich genaue Dickenbegrenzungen vorzugeben, da diese bei der Vulkanisation durch die langen Heizzeiten am meisten geschädigt werden und beim Fahren unter Last mit hohen Geschwindigkeiten, sich der Reifenquerschnitt durch die hohe Materialdicke am meisten erwärmt. Erindungsgemäß gelten für NKW-Reifen Beziehungen, die sich aus der Geometrie des Reifenquerschnitts der Standardabmessungen wie folgt berechnen lassen:

$$DS + DW < 2P(H/B) + 0,04B + 0,02H + 2M + N$$

$$DW < P(H/B) + 0,02B - 0,01H + M$$

wobei für die Konstanten folgende Werte gelten:

$$P = 7mm$$
$${M \atop N} = \text{Profiltiefenangaben der Reifen}$$

Die wirksame Länge der Fäden der Karkasse als freie Länge zwischen Felgenpunkt (FP) und Gürtelpunkt (GP) wird durch die Reduzierung der Dicke von Wulst/unterer Seitenward (Wirkungsbereich des Kerngummi) und der Einbeziehung einer Kerngummishorehärte von kleiner als 58 Einheiten um ca. 30% verlängert.

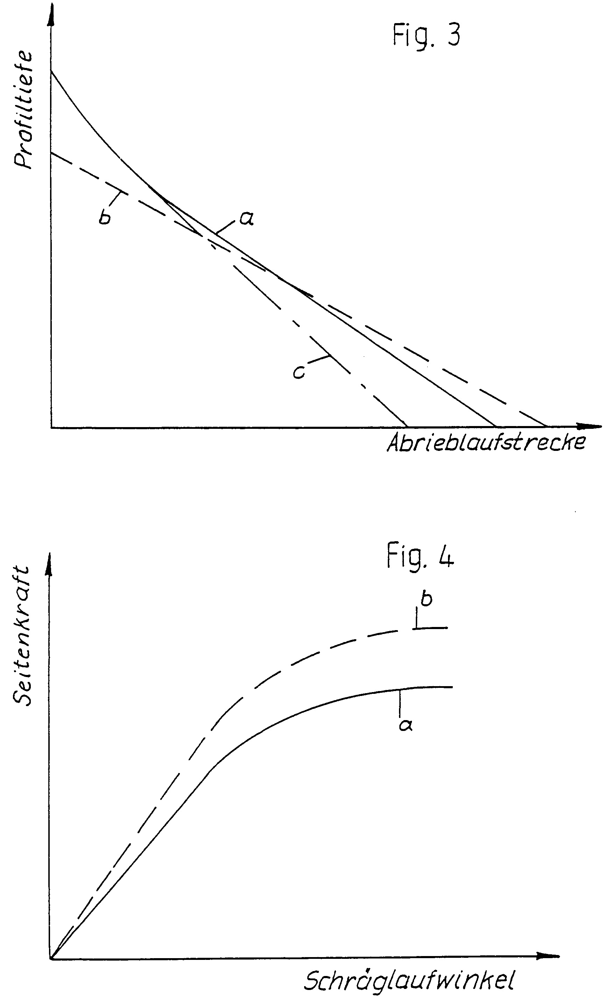

Ziel der Erfindung ist es, die Abtrieblaufstrecke gemäß Fig.3 zu erhöhen. Die erfinderische Lösung ermöglicht dieses in zweifacher Hinsicht.

Durch die Versteifung des Gürtellaufflächenbereiches und der Reduzierung der Karkassensteife wird bei Anliegen von Seitenkräften der spezifische Abrieb gesenkt. Es ist daher möglich, die Profiltiefe des Reifens zu reduzieren, ohne eine Laufleistungseinbuße hinnehmen zu müssen. Die erfindungsgemäße Lösung vermeidet oder reduziert den sonst üblichen progressiven Abriebverlust zu Beginn des Reifeneinsatzes. Gleichzeitig kann der Schulterkantenabrieb, der vornehmlich an Frontachsreifen auftritt vermieden bzw. reduziert werden.

Das Wesen der Erfindung besteht weiterhin darin, Fahrzeugluftreifen mit höherem Leistungsvermögen zu schaffen, welche ihre entscheidenden Vorteile durch die Vulkanisation in der Reifenform erhalten. Durch die gleichzeitige Reduktion von Schulterdicke und Dicke im unteren Seitenwand/Wulstbereich wird eine gleichmäßige Vulkanisation ermöglicht. D. h. keine Gummipartie erhält eine zu große oder zu geringe Aufheizung, die von unterschiedlicher Wärmedämmung unterschiedlich großer Materialstärken herrühren könnte. Durch die Verringerung der genannten Dicken werden insgesamt kürzere Vulkanisationszeiten und geringere -temperaturen erreicht.

Bekannt ist (Buch: Werner Kleemann, Mischungen für die Elastverabeitung, 1982, VEB Deutscher Verlag für Grundstoffindustrie, Leipzig, Seite 201 ff), daß durch eine milde Heizung bzw. durch eine Verkürzung der Heizzeit das Kautschukmaterial geschont wird und durch eine Verringerung der Reversion die Alterung, das Rißwachstum und die Laufflächenausbröckelungen herabgesetzt werden können. Im Bereich des direkten Kontaktes des Reifens mit der Reifenform kann so die mehrfache Übervulkanisation deutlich verringert werden.Durch kürzere Vulkanisationszeiten und niedrigere Vulkanisationstemperaturen kann die Vernetzungsdichte der Laufflächenmischung gesteigert und ein Abbau der thermisch instabilen Polysulfidbrücken reduziert werden.

Es ist weiterhin bekannt (Zeitschrift: Eike Begemann, Anlagen und Verfahren für die Reifenvulkanisation, in Gummi, Asbest, Kunststoffe, Heft 5/1978, Seite 320 ff), daß die Aufheizvorgänge im Reifenrohling in der Vulkanisationsform instationäre Vorgänge sind. Hiernach gilt nach dem allgemeinen Wärmeleitungsgesetz von Fourier für eine Halbierung der Schichtdicke nur 1/4 an Aufheizzeit.

Die Gesamtvulkanisationszeit des Reifens kann damit deutlich reduziert werden.

Dadurch, daß bei der Herstellung des Reifens genauestens darauf geachtet wird, daß die Kontur der Radialkarkasse des in Vulkanisation befindlichen Reifens zwischen Felgenpunkt (FP) und Gürtelpunkt (GP) entsprechend der natürlichen Gleichgewichtskontur verläuft, unterliegt der Reifen auch im druckbeaufschlagten Zustand keinerlei Scherkräften sondern lediglich den druckentsprechenden Dehnungsverformungen. Wegen der vernachlässigbar geringen Deformationsbelastungen kann die Karkasse deshalb über die gesamte Höhe von der Lauffläche bis zum Felgenpunkt eine gleichmäßig geringe Stärke aufweisen.

Die Festlegung des Felgenpunktes für Reifen auf Flachbett- und Schrägschulterfelgen erfolgt dabei 5 bis 10 mm unterhalb der Oberkante des Felgenhornes der Regelfalge. Bei Reifen, die aur Steilschulterfelgen zum Einsatz kommen, liegt der Felgenpunkt direkt an der Oberkante des Drahtkerns. Die Festlegung des Gürtelpunktes erfolgt in senkrechter Verlängerung der Linie Laufflächenbreite/Gürtelbreite auf die Karkaßkontur (10/1).

Auf eine Versteifung durch mehrere Lagen von gekreuzten Seitenbändern bzw. viele Aufbauteile mit unterschiedlichen Vulkanisationseigenschaften kann verrichtet werden und somit eine wesentlich geringere Materialdicke (DW) realisiert werden.

Die Karkasse kann somit zwischen Felgen-und Gürtelpunkt ungehindert als Federelement wirken.

Materialverlagerungen und damit schädliche Deformationen und Schubbeanspruchungen zwischen den Aufbauteilen als Folge der Beaufschlagung des Reifens mit Innendruck können somit vermieden werden. Es verbleibt lediglich das Wachstum der Reifen durch Innendruck im Gürtel/Laufflächenbereich.

Der Kerngummi (6) kann vorteilhafterweise einteilig ausgeführt werden. Aus fertigungstechnischen Gründen kann es erforderlich werden, zusätzlich ein Wulstfüllelement (5) einzusetzen. Dann gilt der Grundsatz, daß die Shore A-Härte der Vulkanisate von Kerngummi und Wulstfüllgummi gleich sind.

Die erfindungsgemäßen Reifen weisen in der beschriebenen Art und Weise eine erhöhte Wulstfestigkeit auf. Zum Nachweis der erhöhten Dauerwulstfestigkeit kann ein üblicher Labor-Trommel-Prüfstand herangezogen werden. Der Reifen wird mit einer vorbestimmten sehr hohen und konstanten Last und mit Normluftinnendruck gegen die mit einer vorbestimmten geringen Geschwindigkeit laufende Trommel mit glatter Oberfläche gedrückt, die den Reifen ununterbrochen dreht. Es wird die Laufstrecke des Reifens bis zum Auftreten eines Fehlers im Wulstbereich ermittelt. Im Vergleich zu Serien-Reifen mit einem Stahlkordseitenband erhöht sich bei den erfindungsgemäßen Reifen die Wulsthaltbarkeit um das Fünf- bis Sechsfache. Oder anders ausgedrückt, erreichen oder übertreffen die erfindungsgemäßen Reifen die Wulstdauerhaltbarkeit von Reifen mit vielen Versteifungslagen bzw. Seitenbändern.

Ausführungsbeispiel

Die Erfindung wird nachstehend an zwei Beispielen näher erläutert. Die zugehörigen nichtmaßstäblichen Zeichnungen zeigen:

Fig.1: einen radialen Schnitt durch einen Fahrzeugluftreifen der Nenngröße 365/80 R 20

Fig.2: einen radialen Schnitt durch einen Fahrzeugluftreifen der Nenngröße 385/65 R 22.5

Fig. 3 zeigt ein Diagramm: Profiltiefe in Bezug auf die Abrieblaufstrecke, für verschiedene Reifentypen (a), (b) und (c).

Fig. 4 zeigt ein Diagramm: Seitenkraft in Bezug zum Schräglaufwinkel, ebenfalls für verschiedene Reifentypen (a) und (b).

Beide Reifenquerschnitte sind im Aufbau durch die folgenden Aufbauteile/Merkmale gleichermaßen gekennzeichnet:

Die Reifenquerschnitte bestehen im wesentlichen aus vulkanisierbaren Kautschukmischungen, die während des Vulkanisationsprozesses zu Gummi vulkanisiert werden und dabei die Festigkeitsträger der Reifen, die in den Aufbauteilen Karkaßlage (10), Gürtel (2) und Drahtkern (9) enthalten sind, fest einbetten. Die Karkaßlage ist um die Drahtkerne herumgeschlagen und durch eine genügend große Umschlaglänge gegen Herausziehen gesichert.

Zwischen dem Laufstreifen (1) und der Karkaßlage (10) befindet sich ein aus vier Lagen bestehender zugfester Gürtel (2).

Im Wulstbereich sind außerhalb der Karkaßlage (10) ein einteiliger Kerngummi (6) und ein Wulstfüllgummi (5) sowie zum Schutz gegen Felgenanscheuerungen ein Felgengummi (7) und ein Seitenband (8) eingesetzt.

Der Reifenquerschnitt ist durch die Standardmaße in Höhe (H) und Breite (3) gekennzeichnet.

Für den erfindungsgemäßen Aufbau erfolgt nach der Festlegung von Felgenpunkt (FP) und Gürrelpunkt (GP) die Berechnung der Kontur der Karkaßlage (10/1) entsprechend der Beziehung:

$$\cos F = R^2 - Rm^2 / Rz^2 - Rm^2$$ oder vorteilhafter über die Berechnung der entsprechenden Gleichgewichtstradien nach der Beziehung:

$$RG = Rz^2 - Rm^2 / 2R.$$

Anschließend erfolgt die Berechnung der Gesamtmaterialdicke (DS + DW) und der Dicke der unteren Seitenwand/Wulst (DW) entsprechend den Beziehungen:

$$DS + DW < 2P(H/B) + 0,04B + 0,02H + 2M + N$$

$$DW < P(H/B) + 0,02B - 0,01H + M$$

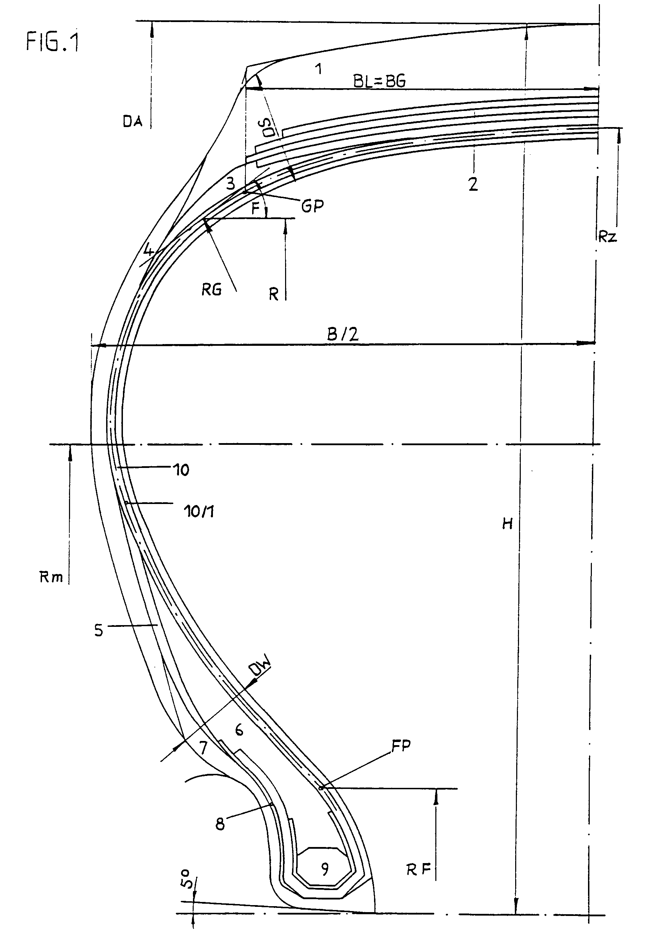

Für den in Fig.1 dargestellten Reifen 365/80 R 20 mit einem Laufflächenprofil, welcheseine geschlossene Außenrille aufweist, also bestens geeignet ist für den Einsatz an Anhängern und Aufliegern, ergeben sich folgende Verhältnisse:

Felgenpunktradius (RF)
= 294mm
Zenitradius der Karkasse (RZ)
= 510mm
Wulstdicke (DW)
= 24mm
Gesamtmaterialdicke (DS + DW)
= 61mm
breiteste Gürtellage (BG)=Laufflächenbr.(BL)
= 250mm
Härte des Kerngummi nach DIN
= 55Shore A
Profiltiefe (M)
= 15mm

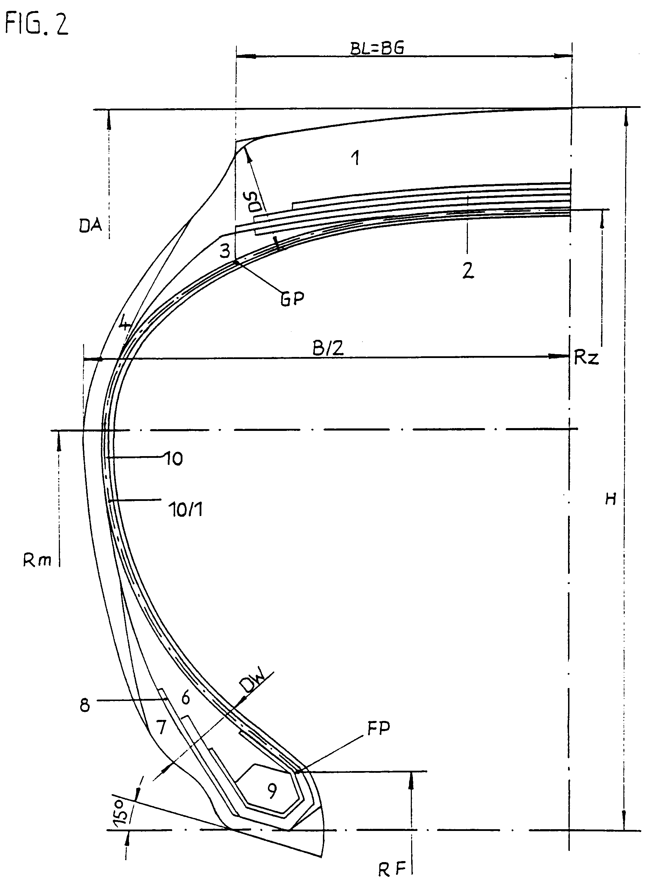

Für den in Fig.2 dargestellten Reifen 385/65 R 22.5 mit einem Laufflächenprofil mit geschlossener Außenrille, für den Einsatz an Anhängern und Aufliegern geeignet, ergeben sich folgende Verhältnisse:

Felgenradius (RF)
= 296mm
Zenitradius der Karkasse (RZ)
= 503mm
Wulstdicke (DW)
= 24mm
Gesamtmaterialdicke (DS + DW)
= 59mm

breiteste Gürtellage (BG)=Laufflächenbr.(BL)
= 290mm
Härte des Kerngummi nach DIN
= 55Shore A
Profiltiefe (M)
= 15mm

Während des Vulkanisationsprozesses können kürzere Heizzeiten oder tiefere Temperaturen angewendet werden, die die entscheidende Voraussetzung für die Schonung des Kautschukmaterials/Gummis sind und dadurch zur Qualitätssteigerung einen entscheidenden Beitrag leisten. Die so konstruierten Reifen ergeben optimale Bedingungen hinsichtlich Erhöhung der Lebensdauer, der Runderneuerungsfähigkeit, der Senkung des Rollwiderstandes bei gleichzeitiger Senkung des Materialeinsatzes. Es ist jedoch auch erfindungsgemäß, wenn nur die qualitätsverbessernden Maßnahmen im Bereich der Wulst/unteren Seitenwand an einem Reifen angewendet werden. Durch die Senkung der Materialdicke und der Schub-und Scherspannungen kann der Wärmeaufbau im Bereich der Wulst deutlich herabgesetzt werden und somit die Wulstdauerhaltbarkeit erhöht werden.

Der in Fig. 3 dargestellte Sachverhalt gibt die Prafiltiefe in Abhängigkeit von der Abrieblaufstrecke für verschiedene Reifentypen an:

- Kurve (a): herkömmlicher Reifen,
- Kurve (b): erfindungsgemäßer Reifen,
- Kurve (c): herkömmlicher Reifen mit verstärktem Schulterkantenabrieb.

Aus Fig. 4 ist die Übertragung höherer Seitenkräfte bei Kurvenfahrten des erfindungsgemäßen Reifens erkennbar:

- Kurve (a): herkömmlicher Reifen,
- Kurve (b): erfindungsgemäßer Reifen.

Die Begründung liefert auch hier wieder die Erhöhung des Verhältnisses EJ/K-Wert.

**Bezugszeichenliste**

| | |
|---|---|
| 1 | Laufstreifen |
| 2 | Gürtel |
| 5 | Wulstfüllgummi |
| 6 | Kerngummi |
| 7 | Felgengummi |
| 8 | Seitenband |
| 9 | Drahtkern |
| 10 | Karkaßlage |
| 10/1 | Kontur der Karkaßlage |
| H | Höhe |
| B | Breite |
| FP | Felgenpunkt |
| GP | Gürtelpunkt |

DS   Dicke der unteren Seitenwand
DW   Dicke der Wulst
RF   Felgenpunktradius
rz   Zenitradius der Karkasse
M    Profiltiefe
BG   breiteste Gürtellage
BL   Breite der Lauffläche

**Patentansprüche**

1. Ein Nutzfahrzeug-Luftreifen,

   mit einer hohen oder erhöhten Wulstdauerhaltbarkeit,
   mit einem Standardaußendurchmesser (DA) größer als 850 mm,
   für eine zulässige Standardbelastung von größer als 2500 kp (gemäß der zugeordneten Referenzgeschwindigkeit);
   weist die folgenden Merkmale auf:

   1 ein H/B-Verhältnis von 0,5 - 1 (für den Einsatz auf Flachbett-, Schrägschulter- und Steilschulterfelgen);
   2 eine Radialkarkasse (1);

   2.1 die Radialkarkasse (1) ist um die Drahtkerne (9) herum verankert;
   2.2 die Kontur (10/1) der Radialkar-kasse (1) verläuft zwischen Felgen-punkt (FP) und Gürtelpunkt (GP) entsprechend der natürlichen Gleichgewichtskontur;

   3 einen Schulterfüllgummi (3) zwischen Gürtelkante und Karkasse;
   4 einen Gürtel (2) zwischen Lauffläche (1) und Karkasse;

   4.1 der Gürtel (2) weist mindestens zwei spitzwinklig gekreuzte Gürtellagen mit einer Breite von etwa 60% bis 80% der Standardbreite (B) auf;

   4.1.1 die Festigkeitsträger sind durch vulkanisierbare Kautschukmischungen/Gummi eingebettet;
   4.1.2 die Kautshukmischun-gen/Gummi weisen im Wulstbe-reich zwischen Karkaßlage (10) und Lagenumschlag (11) einen Drahtkern (9) auf;
   4.1.3 die Kautschukmischun-gen/Gummi weisen einen einteili-gen Kerngummi (6) auf;

   4.1.3.1 der Kerngummi besteht aus einem Vulkanisat mit einer Härte von < 58 Shore A nach DIN;

   4.1.4 zum Schutz vor Felgenan-scheuerungen weisen die Kau-tschukmischungen/Gummi einen Felgengummi (7) und ein Seitenband (8) von geringer Höhe auf;

   5 die gesamte Materialdicke in der unteren Seitenwand/Wulst (DW) errechnet sich aus den Standardabmessungen von Reifenquerschnittshöhe (H) und -breite (B) entsprechend der Beziehung:

   $$DW < P(H/B) + 0,02B - 0,01H + M;$$

   5.1 für die Berechnung von DW gelten folgende Werte:

   P = 7 mm,
   M = 15 mm;

   6 die maximalen, aus Schulterdicke (DS) und Wulstdicke (DW) bestehenden Materialdicken der Reifenquerschnitte errechnen sich aus den Standardabmessungen von Reifenquerschnittshöhe (H) und -breite (B):

   $$DS + DW < 2P(H/B) + 0,04B + 0,02H + 2M + N;$$

   6.1 für die Berechnung von DS + DW gelten zusätzlich folgende Werte:

   N = 0 mm für Reifenproflle mit geschlossenem Außenstollen, N = 3 mm für Reifenprofile mit offenem Außenstollen.

2. Nutzfahrzeug-Luftreifen nach Anspruch 1, **dadurch gekennzeichnet** daß die Felgenpunkte (FP) für Reifen, die auf Flachbett- oder Schrägschulterfelgen eingesetzt werden, 5 bis 10 mm unterhalb der Oberkante des Felgenhornes der Regelfelge und für Reifen, die auf Steilschulterfelgen zum Einsatz kommen, direkt an der Oberkante des Drahtkerns festgelegt sind.

**Claims**

1. A commercial vehicle pneumatic tyre,

   having a high or increased bead durability and a standard external diameter (DA) greater than 850 mm
   for a permissible standard loading greater than 2500 kp (according to the associated reference speed),
has the following features:

1 a H:W ratio of 0.5:1
(for use on flat bed rims, inclined shoulder rims and steep-angle shoulder rims);
2 a radial carcase (1);

2.1 the radial carcase (1) is secured around the wire cores (9);
2.2 the configuration (10/1) of the radial carcase (1) extends between rim point (FP) and belt point (GP) corresponding to the natural equilibrium configuration;

3 a shoulder filling rubber (3) between belt edge and carcase;
4 a belt (2) between tread surface (1) and carcase;

4.1 the belt (2) has at least two belt plies, which are crossed at an acute angle and have a width of roughly between 60% and 80% of the standard width (B);

4.1.1 the reinforcing members are embedded by vulcanisable caoutchouc mixtures/rubber;
4.1.2 the caoutchouc mixtures/rubber have a wire core (9) in the bead region between carcase ply (10) and ply covering (11);
4.1.3 the caoutchouc mixtures/rubber have a one-piece core rubber (6);

4.1.3.1 the core rubber comprises a vulcanisate with a DIN Shore A hardness of < 58;

4.1.4 for protection to prevent rim wear phenomena, the caoutchouc mixtures/rubber have a rim rubber (7) and a lateral strip (8) of minimal height;

5 the entire material thickness in the lower lateral wall/bead (DW) is calculated from the standard dimensions of tyre cross-sectional height (H) and width (B) corresponding to the equation:

DW < P(H/B) + 0.02B - 0.01H + M;

5.1 the following values apply for the calculation of DW:

P = 7 mm,
M = 15 mm;

6 the maximum material thicknesses of the tyre cross-sections, comprising shoulder thickness (DS) and bead thickness (DW), are calculated from the standard dimensions of tyre cross-sectional height (H) and width (B):

DS + DW < 2P(H/B) + 0.04H + 0.02H + 2M + N;

6.1 the following values additionally apply for the calculation of DS + DW:

N = 0 mm for tyre profiles having a closed external lug,
N = 3 mm for tyre profiles having an open external lug.

2. Commercial vehicle pneumatic tyre according to claim 1, characterised in that the rim points (FP) for tyres which are used on flat bed rims or inclined shoulder rims, are secured 5 to 10 mm beneath the upper edge of the rim flange of the control rim, and the rim points (FP) for tyres which are used on steep-angle shoulder rims are secured directly on the upper edge of the wire core.

**Revendications**

1. Un pneumatique pour véhicule utilitaire,

présentant une durabilité élevée ou accrue du talon,
d'un diamètre extérieur standard (DA) supérieur à 850mm pour une charge standard autorisée supérieure à 24525 N (2500 kg) (selon la vitesse de référence correspondante);
présente les caractéristiques suivantes:

1 un rapport H/B de 0,5-1
(pour emploi sur des jantes à base plate, à épaulement à pente oblique et à épaulement à pente raide);
2 une carcasse radiale (1);

2.1 la carcasse radiale (1) est ancrée autour des tringles (9);
2.2 le contour (10/1) de la carcasse radiale (1) court entre le point sur jante (FP) et le point sur carcasse (GP) conformément au contour d'équilibre naturel;

3 un caoutchouc vulcanisé de bourrage d'épaulement (3) entre le bord de la ceinture et la carcasse;

4. une ceinture (2) entre la bande de roulement (1) et la carcasse;

4.1 la ceinture (2) présente au moins deux couches de ceinture croisées à angle aigu, d'une largeur d'environ 60% à 80% de la largeur standard (B);

4.1.1 les supports de résistance sont enrobés par des mélanges de caoutchouc vulcanisables/des caoutchoucs vulcanisés;

4.1.2 les mélanges de caoutchouc/les caoutchoucs vulcanisés présentent une tringle (9) dans la zone du talon entre la couche de carcasse (10) et le rabattement (11).

4.1.3 les mélanges de caoutchouc/les caoutchoucs vulcanisés présentent un caoutchouc vulcanisé d'enveloppage de tringle d'une seule pièce (6)

4.1.3.1 le caoutchouc vulcanisé d'enveloppage de trame est constitué d'un produit vulcanisé d'une dureté de < 58 Shore A selon les normes DIN;

4.1.4 à titre de protection à l'égard des frottements contre la jante, les mélanges de caoutchouc/les caoutchoucs vulcanisés présentent un caoutchouc vulcanisé (7) de bourrage de jante et une bandelette latérale (8) de moindre hauteur;

5. l'épaisseur totale du matériau dans la paroi latérale inférieure (le talon (DW) se calcule à partir des dimensions standard de la hauteur (H) et de la largeur (B) de la section du pneumatique selon la relation:

$$DW < P(H/B) + 0,02B - 0,01H + M;$$

5.1 pour le calcul de DW on a les valeurs suivantes

P = 7mm,
M = 15mm;

6. les épaisseurs maximales de matériau, qui sont l'épaisseur de l'épaulement (DS) et l'épaisseur du talon (DW) des sections du pneumatique se calculent à partir des dimensions standard de la hauteur (H) et de la largeur (B) de la section de référence:

$$DS + DW < 2P(H/B) + 0,04B + 0,02H + 2M + N;$$

6.1 pour le calcul de DS + DW on a en outre les valeurs suivantes:

N = 0mm pour des sculptures de pneumatiques à côtes extérieures fermées,
N = 3mm pour des sculptures de pneumatiques à côtes extérieures ouvertes.

2. Pneumatique pour véhicule utilitaire selon la revendication 1,
caractérisé
par le fait que les points sur jante (FP) pour des pneumatiques employés sur des jantes à fond plat ou des jantes à épaulement à pente oblique sont fixés à 5 à 10mm en dessous du bord supérieur du rebord de la jante courante et, pour des pneumatiques employés sur des jantes à épaulement à pente raide, directement sur le bord supérieur de la tringle.

FIG.1

FIG. 2

Fig. 3

Fig. 4